# EUROPEAN PATENT APPLICATION

(11) **EP 2 014 667 A1**
(43) Date of publication of application: **14.01.2009**
(21) Application number: 07112300.4
(22) Date of filing: 11.07.2007
(51) Int. Cl.: C07F 13/00, C07D 323/00

(54) **Catalyst for alkyne metathesis**

(71) Applicant: Technische Universität Braunschweig, 38106 Braunschweig (DE)
(72) Inventor: Tamm, Matthias, 38106, Braunschweig (DE); Beer, Stephan, 38106, Braunschweig (DE); Bannenberg, Thomas, 38116, Braunschweig (DE)
(74) Representative: Taruttis, Stefan Georg

(57) **Abstract**

The invention provides catalytically active compounds for alkyne metathesis comprising a ligand, on his part containing a guanidinate core which is forming a complex with a transition metal atom. Formally, the guanidinate core is a mononegative ligand that binds with the metal atom. One or both of the nitrogen atoms of the guanidiate core, which are not participating in the metal complexing bond, can be substituted with substituents being selected from hydrogen, alkyl, alkenyl, aromatic residues, optionally including hetero atoms, e.g. halogen atoms, preferably fluorine.

## Description

The present invention relates to catalysts suitable for alkyne metathesis, to the use of catalysts in alkyne metathesis and to processes in the presence of the catalysts, e.g. synthesis or metathesis processes.

Catalysts of the invention contain a metal atom which is coordinated by two alkoxy groups and one anionic electron donating ligand. In the catalytically active form, the metal atom is bound to a substituted carbon by a triple bond. In use as alkyne metathesis catalysts, the compounds of the invention mediate transfer of the substituted carbon by formal transfer to or exchange with another carbon atom being linked by a triple bond, i.e. an alkyne, while maintaining the triple bond.

### State of the art

Tamm (Chem. Commun. 2004, 876-877) disclose the synthesis of titanium complexes having imidazolin-2-iminato ligands.

In Tamm et al. (Org. Biomol. Chem. 2007, 5, 523-530), the structure of 2-iminoimidazolin compounds is described.

Tamm et al. (Dalton Trans. 2006, 459-467) describe the synthesis of imidazolin-2-iminato titanium complexes and their use in ethylene polymerization catalysis.

Fürstner et al. (Chem. Commun. 2005, 2307-2320) describe alkyne metathesis using a molybdenum tris-amido complex of tert.-butyl-3,5-dimethyl benzene.

When reviewing the metathesis catalysts for the conversion of alkenes and alkynes, Schrock et al. (Adv. Synth. Cat. 2007, 349, 55-77) describe molybdenum or tungsten tris-amido or tris-alkoxy compounds for use in metathesis catalysis of alkynes.

Fürstner in Angew. Chem. 2000, 112, 3140-3172, reviews tungsten and molybdenum alkylidene complexes and ruthenium carbene complexes as catalysts for olefin metathesis.

US 2006/0281938 A1 describes alkyne metathesis using a tris-amido metal complex of tert.-butyl-3,5-dimethyl benzene.

WO 99/40047 describes catalysts of the general type M (≡CR1) (OR2)₃, wherein R1 can be alkyl, aryl, alkenyl, alkylthio, dialkylamino, and R2 can be e.g. alkyl, aryl, fluorine alkyl. Further, catalysts can be mixtures of M[N(R1)Ar]₃ with halogen compounds of the type R2₂ EX₂ or R3₃SiX with E = C or Si, X = halogen, and R3 = alkyl or aryl.

One disadvantage of catalytically active tris-amido molybdenum complexes, e.g. according to Fürstner et al. (Chem. Eur. J. 2001, 7, 5299-5317) or from WO 99/40047, is that these require a temperature of above 80 °C and catalyst concentrations of more than 5 to 10 mol-% for a moderate catalytic activity. Further, the known catalysts for alkyne metathesis are unstable as they are sensitive towards inactivation by oxidation or hydrolysis.

### Objects of the invention

In view of the known catalysts and processes for alkyne metathesis, it is an object of the present invention to provide compounds having an alternative structure for use as catalysts in alkyne metathesis and metathesis processes involving the use of the catalytically active compounds. Preferably, the compounds have a structure allowing a high efficiency of the metathesis reaction, preferably allowing metathesis reactions to occur at lower temperatures.

### General description of the invention

The above objects of the invention are attained by the catalytically active compounds of the invention, which comprise a ligand, on his part containing a guanidinate core which is forming a complex with a transition metal atom. Formally, the guanidinate core is a mononegative ligand that binds with the metal atom. One or both of the nitrogen atoms of the guanidiate core, which are not participating in the metal complexing bond, can be substituted with substituents being selected from hydrogen, alkyl, alkenyl, aromatic residues, optionally including hetero atoms, e.g. halogen atoms, preferably fluorine.

Further, substituents to the nitrogen atoms not participating in the metal complexing bond can be linked by at least one single (C-C) or double (C=C) bond.

In addition to the guanidinate core, the metal atom is complexed by two identical or different alkoxy or aryloxy groups, optionally substituted with halogen.

The catalytically active complex exhibits a carbon-metal triple bond, which is essential for alkyne metathesis reactions. The substituents to this carbon atom can be derivatized any way by any substituent moiety because this ligand moiety will be demerged during the metathesis reaction, and therefore does not initially participate in the alkyne metathesis.

The catalytically active compounds of the invention correspond to formula **I**: 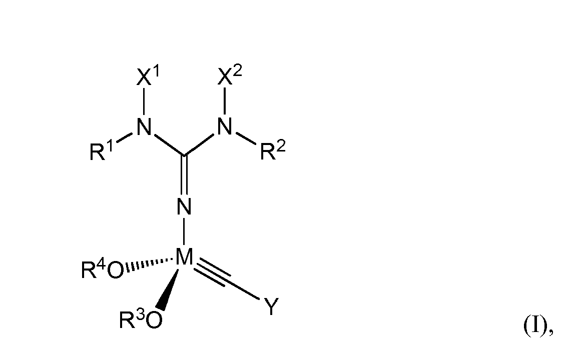 wherein
M is Mo or W,
R¹, R² are independently selected from hydrogen, C1 to C20 alkyl or aryl, optionally containing heteroatoms e.g. N, O, and/or S, preferentially methyl (Me), isopropyl (CHMe₂), tert.-butyl (CMe₃), and aryl, preferentially 2,4,6-Me₃-C₆H₂, and 2,6-*i*Pr₂-C₆H₃, wherein *i*Pr is isopropyl and C₆H₃ is phenyl,
R³, R⁴ are selected from C1 to C20 alkyl or aryl, optionally containing heteroatoms, e.g. N, O, and/or S, preferentially CMe₃, CH(CF₃)₂, CMe₂CF₃, CMe(CF₃)₂, C(CF₃)₃, and aryl, preferentially 2,4,6-(CF₃)-C₆H₂, and 2,6-(CF₃)-C₆H₃,
X¹, X² are independently selected from H, C1 to C20 alkyl or aryl, preferentially both X¹ and X² are CH₂-CH₂, C(H)=C(H), or C(Me)=C(Me),
Y is selected from C1 to C20 alkyl and aryl, preferentially CMe₃ or phenyl (Ph).

One or both of X¹ and R¹, and of X² and R², respectively, can be linked, forming one common substituent to both the nitrogen atoms that do not participate in the complexing of the metal atom. For example, X¹ and X² can be replaced by a group comprising two, three or four atoms in a row, forming a 5-membered, a 6-membered or a 7-membered ring including the nitrogen atoms of the guanidinate core that do not participate in complexing the metal. Examples for groups replacing X¹ and X² are C-C, C=C, C-C-C, and C=C-C with each C substituted by one hydrogen, a halogen, or a (hetero-) alkyl.

Alternatively, X¹ and X² are carbon atoms being linked by single or double bond, an intermediate atom or a group of two atoms, e.g. the intermediate atom or group is selected from -CR¹-, -CR¹₂-CR¹₂-, and -CR¹=CR¹-, with each R¹ independently defined as above, preferably -CH=CH-, -C(CH₃)=C(CH₃)-.

Preferably, X¹ and X² are replaced by C=C with each C substituted by one hydrogen, a halogen, or a (hetero-) alkyl forming an optionally further substituted 2-imidazolyl substituent to the nitrogen atom that complexes the metal atom. As a result, the following structure II is obtained: 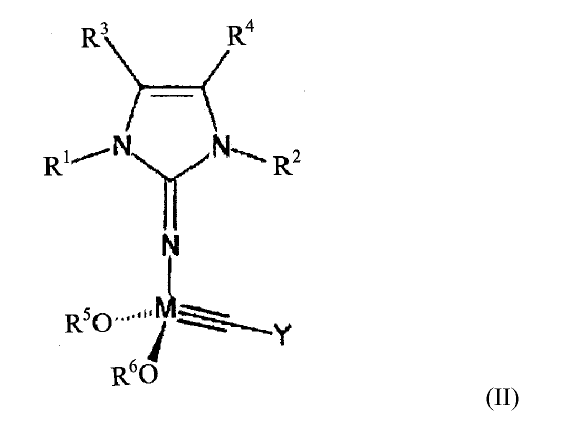 R¹ and R² preferably are selected independently from electron donating groups, e.g. tert.-butyl.
R³ and R⁴ can be selected independently from hydrogen, C 1 to C20 (hetero-) alkyl or (hetero-) aryl, preferably CMe₃, CH(CF₃)₂, CMe₂CF₃, CMe(CF₃)₂, and C(CF₃)₃.

In the catalytic processes, the compounds of the invention show the advantage that they catalyze alkyne metathesis reactions more efficiently, e.g. at lower temperatures than known catalysts, e.g. than tris-amido molybdenum complexes. Therefore, the catalysts of the invention are advantageous in use for synthetic reactions of temperature sensitive compounds.

The catalytically active compounds of the invention are advantageous in that they do not require an inert gas atmosphere during the catalysis reaction, but can be used at ambient, preferably at reduced pressure, e.g. in the range of 10 to 500 mbar. Further, the catalytic activities of the compounds of the invention are higher than those of prior art alkyne metathesis catalysts. Accordingly, the catalysts of the invention can be used at lower temperatures, e.g. in the range of 10 to 100°C and/or at lower concentrations than previous catalysts.

In general, compounds used as catalysts in the present invention can be synthesized according to the methods described in Tamm et al., Dalton Trans. 2006, 459-467, while replacing titanium with molybdenum or tungsten.

### Detailed description of the invention

The invention is now described in greater detail by way of examples.

### Example 1: Synthesis of catalyst

First, 1,3-di-*tert.*-butylimino-2-imidazoline lithium (ImN)Li was synthesized by dissolving 1,3-di-*tert*.-butylimidazoline-2-imine (718 mg, 3.68 mmol) in 45 mL hexane in a 100 mL Schlenk tube and cooling to -30 °C. Over a period of 5 min, 2.1 mL of a hexane solution of methyllithium (1.6M, 3.4 mmol) was added and stirred for 2 h allowing the solution to warm to 0 °C. The resulting white suspension was filtered through a Schlenk frit, and the residue was washed 5 times with 10 mL of hexane. The remaining white powder was dried for 5 h at high vacuum to yield 762 mg (97 %) of pure product. ¹H NMR (200 MHz, C₆D₆, 25 °C): δ 1.58 (18 H, s, C(C*H*₃)₃), 6.11 (2 H, s, C*H*); ¹³C NMR (150.9 MHz, C₆D₆, 25 °C): δ 30.6 (3 C, s, C(*C*H₃)₃), 53.1 (2 C, s, N*C*Me₃), 106.6 (2 C, s, N*C*H), 141.1 (1 C, s, N*C*N); Found for C₁₁H₂₀N₃Li: C 65.2 %, H 10.3 %, N 19.8 %; Calculated: C 65.6 %, H 10.0 %, N 20.9 %.

The intermediary product corresponds to

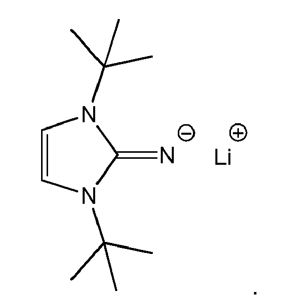

A toluene solution of **(ImN)Li** (190 mg, 0.944 mmol) was slowly added to the tungsten alkylidyne complex {Me₃CC≡W[OCMe(CF₃)₂]₃(dme)} (837 mg, 0.944 mmol), which was dissolved in a 100 mL Schlenk tube in 25 mL toluene and stirred for 10 min at room temperature. The yellow-orange suspension was filtered through an Schlenk frit to remove any by-products. Evaporation of the solvent gave the clean product as yellow crystalline powder. Single crystals could be obtained by cooling a saturated diisopropylether solution to -35°C. Yield: 726 mg of yellow crystals (95%). ¹H NMR (400 MHz, C₆D₆, 25 °C): δ 1.15 (9 H, s, W≡CCC*H*₃), 1.29 (18 H, s, NCC*H*₃), 1.96 (6 H, br, C(C*H*₃)(CF₃)₂), 5.94 (2 H, s, C*H*); ¹³C NMR (150.9 MHz, C₆D₆, 25 °C): δ 20.5 (2 C, s, OC*C*H₃), 28.7 (6C, s, NC*C*H₃), 33.8 (3 C, s, CC*C*H₃), 50.8 (²*J*_{CW} = 38 Hz, 1 C, O*C*CH₃), 51.7 (2 C, s, N*C*CH₃), 81.7 (2 C, m, O*C*CF₃), 110.0 (2 C, s, N*C*=*C*N), 124.1 (¹J_{CF} = 287 Hz, 2 C, q, *C*F₃), 124.8 (¹J_{CF} = 287 Hz, 2 C, q, *C*F₃), 159.4 (1 C, s, N*C*N), 285.6 (¹*J*_{CW} = 274 Hz, 1 C, s, W≡*C*); ¹⁹F NMR (376.5 MHz, C₆D₆, 25 °C): δ -78.6 (⁴*J*_{FF} = 19 Hz, 6 F, q, C*F*₃), -76.4 (⁴*J*_{FF} = 19 Hz, 6 F, q, C*F*₃); Found for C₂₄H₃₅N₃F₁₂O₂W: C 36.6 %, H 4.7 %, N 5.2 %; Calculated C 35.6 %, H 4.4 %, N 5.2 %. From the data, the following structure of the catalyst was deduced:

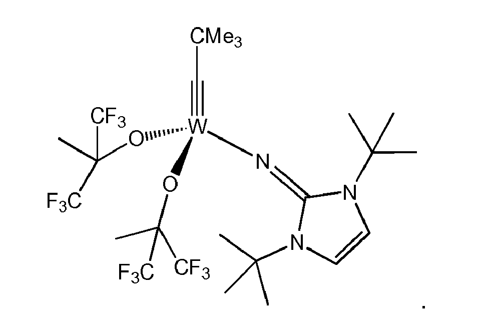

The alternative molybdenum-containing catalyst was synthesized using the respective molybdenum alkylidyne complex in the place of the tungsten alkylidyne complex.

### Example 2: Synthesis of catalyst

As described in Example 1, 1,3-di-*tert.*-butylimino-2-imidazoline lithium (ImN)Li was synthesized, and a toluene solution of (ImN)Li (173 mg, 0.860 mmol) was slowly added to the tungsten alkylidyne complex [Me₃CC≡W(OCMe₃)₃] (400 mg, 0.847 mmol), which was dissolved in a 100 mL Schlenk tube in 33 mL toluene and stirred for 120 min at room temperature. The yellow-orange suspension was filtered through an Schlenk frit to remove any by-products. Evaporation of the solvent and extraction with hexane gave the pure product as yellow crystalline powder. Single crystals could be obtained by cooling a saturated diisopropylether solution to -35 °C. Yield: 488 mg of yellow crystals (97%). ¹H NMR (400.1 MHz, C₆D₆, 25 °C): δ 1.43 (18 H, s, NC(C*H*₃)₃), 1.44 (9 H, s, W≡CC(C*H*₃)₃), 1.66 (18 H, s, OC(C*H*₃)₃), 6.03 (2 H, s, C*H*); ¹³C NMR (150.9 MHz, C₆D₆, 25 °C): δ 29.1 (6 C, s, NC(*C*H₃)₃), 33.5 (6C, s, OC*C*H₃), 34.6 (3 C, s, CC(*C*H₃)₃), 50.9 (1 C, s, C*C*(CH₃)₃), 55.9 (2 C, s, N*C*CH₃), 77.5 (2 C, s, O*C*CH₃), 108.5 (2 C, s, N*C*=*C*N), 159.1 (1 C, s, N*C*N), 273.3 (¹*J*_{CW} = 279 Hz, 1 C, s, W≡*C*); Found for C₂₄H₄₇N₃O₂W: C 47.8%, H 7.9%, N 6.3%; Calculated C 48.6%, H 8.0%, N 7.1%.

From the analytical results, the following structure of the catalyst was deduced:

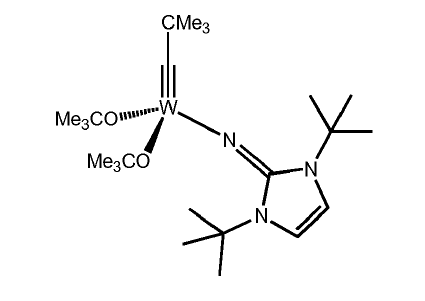

### Example 3: Synthesis of catalyst

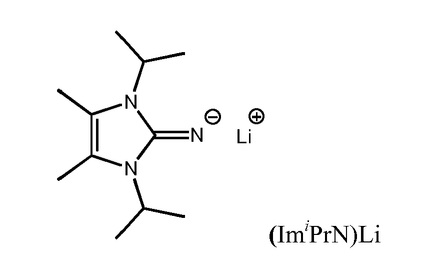

1,3-Di-iso-propyl-4,5-dimethylimidazoline-2-imine (Im*ⁱ*PrN) (1.689 g, 6.314 mmol) was dissolved in 20 mL hexane in a 100 mL Schlenk tube and cooled to -30 °C. Over a period of 10 min, 3.95 mL of a hexane solution of n-butyllithium (1.6M, 6.31 mmol) was added and stirred for 2 h allowing the solution to warm to 0 °C. The resulting white suspension was filtered through a Schlenk frit and the residue was washed 3 times with 10 mL of hexane. The remaining white powder was dried for 7 h at high vacuum giving 0.94 g (yield = 74 %) of pure product having the following analytical data: ¹H NMR (200 MHz, C₆D₆, 25 °C): δ 1.31 (12 H, d, CH(C*H*₃)₂), 1.98 (6 H, s, C*H*₃), 4.72 (2 H, sept, C*H*Me₂); ¹³C NMR (150.9 MHz, C₆D₆, 25 °C): δ 11.5 (2 C, s, *C*H₃), 22.9 (4 C, s, NCH(*C*H₃)₂), 45.1 (2 C, s, N*C*HMe₂), 112.8 (2 C, s, *C=C*), 147.8 (1 C, s, N*C*N); Found for C₁₁H₂₀N₃Li: C 65.2 %, H 10.3 %, N 19.8 %; Calculated: C 65.6 %, H 10.0 %, N 20.9 %.

Then, a toluene solution of (Im*ⁱ*PrN)Li (98 mg, 0.487 mmol) was slowly added to the tungsten alkylidyne complex {Me₃CC≡W[OCMe(CF₃)₂]₃(dme)} (430 mg, 0.485 mmol), which was dissolved in a 100 mL Schlenk tube in 23 mL toluene and stirred for 10 min at room temperature. The yellow-orange suspension was filtered through an Schlenk frit to remove any by-products. Evaporation of the solvent and extraction with hexane afforded 487 mg of the product as yellow powder (63%). ¹H NMR (400.1 MHz, C₆D₆, 25 °C): δ 1.14 (9 H, s, W≡CC(C*H*₃)₃), 1.16 (12 H, d, NCH(C*H*₃)₃), 1.46 (6 H, s, CC*H*₃), 1.94 (6 H, br, C(C*H*₃)(CF₃)₂), 4.37 (2 H, sept, NC*H*(CH₃)₃); ¹³C NMR (150.9 MHz, C₆D₆, 25 °C): δ 9.1 (2 C, s, C*C*H₃), 20.5 (4 C, s, NCH(*C*H₃)₂), 20.7 (2 C, s, OC(*C*H₃)₃), 33.8 (3 C, s, CC(*CH*₃)₃), 46.6 (2 C, s, N*C*HMe₂), 50.1 (1 C, s, C*C*CH₃), 81.0 (2 C, m, O*C*CF₃), 117.4 (2 C, s, NC=CN), 124.1 (¹J_{CF} = 287 Hz, 2 C, q, *C*F₃), 124.4 (¹J_{CF} = 287 Hz, 2 C, q, *C*F₃), 158.6 (1 C, s, NCN), 284.0 (¹J_{CW} = 277 Hz, 1 C, s, W≡C); ¹⁹F NMR (376.5 MHz, C₆D₆, 25 °C): δ -78.6 (⁴*J*_{FF} = 18 Hz, 6 F, q, C*F*₃), -77.7 (⁴*J*_{FF} = 18 Hz, 6 F, q, C*F*₃); MS: 809 (M)

From the analytical results, the following structure of the catalyst was deduced:

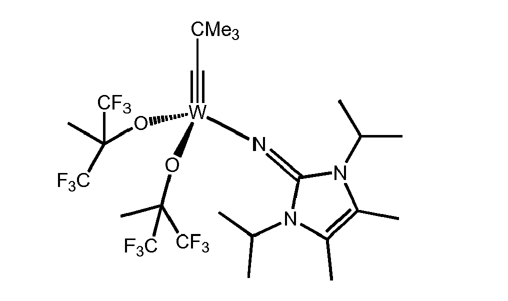

### Example 4: Synthesis of catalyst

A toluene solution of (Im*ⁱ*PrN)Li (149 mg, 0.741 mmol) was slowly added to the tungsten alkylidyne complex [Me₃CC≡W(OCMe₃)₃] (350 mg, 0.741 mmol), which was dissolved in a 100 mL Schlenk tube in 15 mL toluene and stirred for 120 min at room temperature. The yellow-orange suspension was filtered through an Schlenk frit to remove any by-products. Evaporation of the solvent and extraction with hexane gave the pure product as a yellow powder in 46% isolated yield.

¹H NMR (400.1 MHz, C₆D₆, 25 °C): δ 1.30 (12 H, d, NCH(C*H*₃)₂), 1.43 (9 H, s, W≡CC(C*H*₃)₃), 1.58 (6 H, s, C*H*₃), (18 H, s, OC(C*H*₃)₃), 4.52 (2 H, sept, NC*H*); ¹³C NMR (150.9 MHz, C₆D₆, 25 °C): δ 9.6 (2 C, s, CCH₃), 21.4 (4 C, s, NCH(*C*H₃)₂), 33.5 (6C, s, OC(*C*H₃)₃), 34.9 (3 C, s, CC(CH₃)₃), 45.9 (2 C, s, N*C*HMe₂), 50.1 (1 C, s, C*C*CH₃), 76.7 (2 C, s, O*C*CH₃), 115.8 (2 C, s, N*C*=*C*N), 159.8 (1 C, s, N*C*N), 270.7 (¹*J*_{CW} = 281 Hz, 1 C, s, W≡*C*).

From the analytical results, the following structure of the catalyst was deduced:

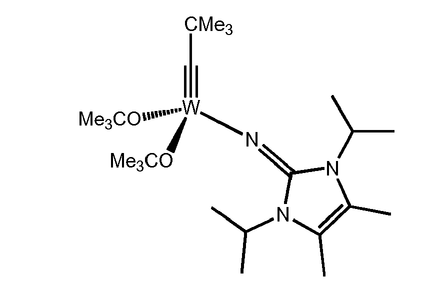

### Example 5: Alkyne metathesis of 1-phenylpropyne using the catalyst

As an example for alkyne transfer reactions using the catalyst of the invention, a solution of 220 mg (1.894·10⁻³ mol) of 1-phenylpropyne 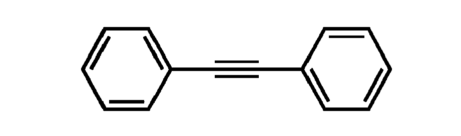 in 6 mL hexane and 1 mol% of catalyst obtained in Example 1 in hexane was stirred at room temperature under reduced pressure (350 mbar) to continuously remove 2-butyne. Filtration after 30 min through alumina and elution with hexane afforded the cross-metathesis product diphenylacetylene (tolane) in yields >90 %.

Analysis of the resultant product gave diphenylacetylene: ¹H NMR (200 MHz, CDCl₃, 25 °C): δ 7.34 (6 H, m, Ar), 7.53 (4 H, m, Ar); ¹³C NMR (50.3 MHz, CDCl₃, 25 °C): δ 89.4 (2 C, s, C≡C), 123.3 (2C, s, Ar), 128.3 (2 C, s, Ar), 128.3 (4 C, Ar), 131.6 (4 C, s, Ar); Found for C₁₄H₁₀: C 93.5 %, H 5.9 %; Calculated C 94.3 %, H 5.7 %.

### Example 6: Alkyne metathesis of 1-(2-methylphenyl)propyne using the catalyst

As an example for the high catalytic activity of the compounds of the invention in alkyne metathesis, the homodimerization of 1-phenylprop-1-yne was performed with a catalyst of the invention using standard equipment as the reaction could be performed at conditions at moderatedly elevated temperature and at moderately reduced pressure, namely in a rotary evaporator at 60 °C.

The stirred solution of 112 mg (0.861·10⁻³ mol) of 1-(2-methylphenyl)prop-1-yne in 10 mL hexane in the presence of 7.0 mg (0.864·10⁻⁵ mol) of catalyst obtained in Example 1 in hexane at 60 °C at reduced pressure (350 mbar) for 30 min, followed by filtration through alumina, elution with hexane, and evaporation of the solvent yielded 100% isolated bis-(2-methylphenyl)acetylene:

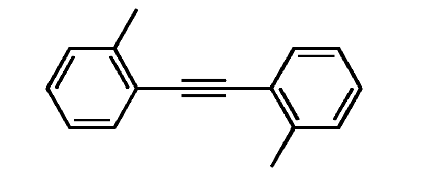

Analysis of the product gave bis-(2-methylphenyl)acetylene:¹H NMR (200.1 MHz, CDCl₃, 25 °C): δ 2.53 (3 H, s, C*H*₃), 2.53 (3 H, s, C*H*₃), 7.23 (6 H, m, Ar*H*), 7.50 (1 H, m, m-Ar*H*), 7.53 (1 H, m, m-Ar*H*); ¹³C NMR (50.3 MHz, CDCl₃, 25 °C): δ 20.9 (2 C, s, C*C*H₃), 92.3 (2 C, s, *C*≡*C*), 123.4 (2 C, s, *C*C≡C), 125.6 (2 C, s, Ar), 128.2 (2 C, s, Ar), 129.5 (2 C, s, Ar), 131.9 (2 C, s, Ar), 140.0 (2 C, s, Ar); Found for C₁₆H₁₄: C 92.5 %, H 7.4 %; Calculated C 93.2 %, H 6.8 %.

When performing the reaction at room temperature under otherwise identical conditions, 100% yield was found after 7 h.

### Example 7: Ring-closing-metathesis using the catalyst

As an example for ring-closing-metathesis, a hexane solution of 6,15-dioxaeicosa-2,18-diyne (125.0 mg, 0.449 mmol) was added to a hexane solution of the catalyst obtained in Example 1 (7.3 mg, 4.49·10⁻⁵ mol, 2 mol%) and stirred for 2 h at room temperature under reduced pressure (350 mbar). Filtration through alumina and elution with hexane yielded the crude product after evaporation of the solvent. Pure product could be obtained by flash chromatography using hexane/ethylacetate 4:1 as the eluent in 95.1 % yield as colorless syrup:

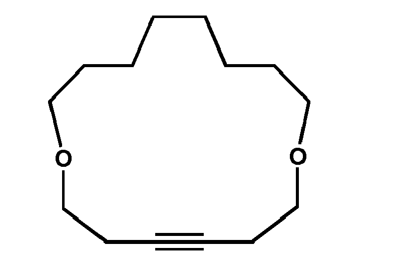

Analysis of the product gave: ¹H NMR (400.1 MHz, C₆D₆, 25 °C): δ 1.45 (4 H, m, C*H*₂), 1.54 (4 H, m, C*H*₂), 1.65 (4 H, m, C*H*₂), 2.27 (4 H, tt, C≡CC*H*₂), 3.25 (4 H, t, OC*H*₂), 3.31 (4 H, t, OC*H*₂); ¹³C NMR (50.3 MHz, C₆D₆, 25 °C): δ 20.9 (2 C, s, *C*H₂), 24.8 (2 C, s, *C*H₂), 27.7 (2 C, s, *C*H₂), 29.3 (2 C, s, *C*H₂), 69.1 (2 C, s, O*C*H₂), 70.0 (2 C, s, O*C*H₂), 79.0 (2 C, s, *C*≡*C*); Found for C₁₆H₁₄: C 72.9 %, H 10.7 %; Calculated C 74.9 %, H 10.8 %.

HR-MS (ESI): m/z 247.168 [M + Na]; GC-MS: m/z 223 (M)⁻, 209 (M -CH₂⁺), 195 (M - C₂H₄), 181 (M -C₃H₇), 165 (M -C₃H₇O), 151 (M - C₄H₉O), 137 (M -C₅H₁₁O), 123 (M - C₆H₁₃O), 109 (M -C₇H₁₅O), 96 (M -C₈H₁₆O), 81 (M -C₈H₁₅O₂), 69 (M -C₉H₁₅O₂), 55 (M - C₁₁H₁₇O₂), 41 (M -C₁₂H₁₉O₂).

### Example 8: Ring-closing-metathesis using the catalyst

As a further example for the high catalytic activity of the compounds according to the invention, the following ring-closing reaction was performed:

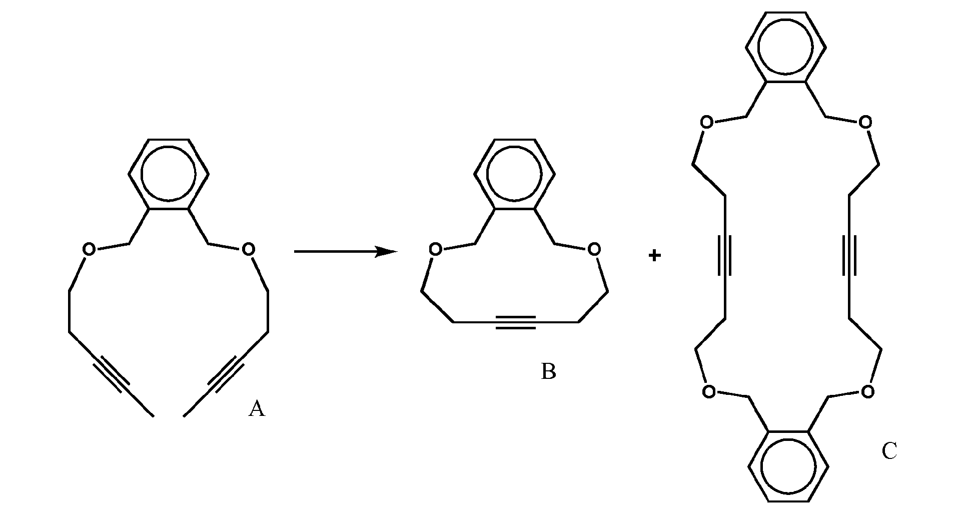

A 3.1 mM hexane solution of the diyne (A) (150.0 mg, 0.055 mmol) and 2 mol% catalyst obtained in Example 1 (9.0 mg, 1.11·10⁻⁵ mol) was stirred for 2 h at room temperature under reduced pressure (350 mbar). Filtration through alumina and elution with Et₂O afforded a mixture of monomeric (B) and dimeric (C) ring after evaporation of the solvent. Fractional crystallization from hexane yielded 19% of monomeric ring and 80% of dimeric ring, which is believed to be due to steric reasons.

For the monomeric ring (B) was found:
¹H NMR (200.1 MHz, CDCl₃, 25 °C): δ 2.41 (4 H, tt, C≡CC*H*₂), 3.73 (4 H, t, OC*H*₂), 4.87 (4 H, s, OC*H*₂), 7.33 (4 H, m, Ar*H*); ¹³C NMR (50.3 MHz, CDCl₃, 25 °C): δ 21.2 (2 C, s, C≡C*C*H₂), 68.4 (2 C, s, O*C*H₂), 71.7 (2 C, s, O*C*H₂), 80.9 (2 C, s, *C*≡*C*), 128.1 (2 C, s, Ar), 130.1 (4 C, s, Ar), 138.5 (4 C, s, Ar); MS (ESI): m/z 239.1 [M + Na].

For the dimeric ring (C) was found:
¹H NMR (200.1 MHz, CDCl₃, 25 °C): δ 2.50 (8 H, tt, C≡CC*H*₂), 3.62 (8 H, t, OC*H*₂), 4.68 (8 H, s, OC*H*₂), 7.33 (8 H, m, Ar*H*); ¹³C NMR (50.3 MHz, CDCl₃, 25 °C): δ 19.6 (4 C, s, C≡C*C*H₂), 68.5 (4 C, s, O*C*H₂), 70.3 (4 C, s, O*C*H₂), 77.7 (4 C, s, *C*≡*C*), 127.3 (4 C, s, Ar), 128.5 (4 C, s, Ar), 135.9 (4 C, s, Ar); Found for C₂₈H₃₂O₄: C 77.1%, H 7.3%; Calculated C 77.7%, H 7.5%; MS (ESI): m/z 455.2 [M + Na].

## Claims

1. Compound having a structure of formula I for use in alkyne metathesis reactions: 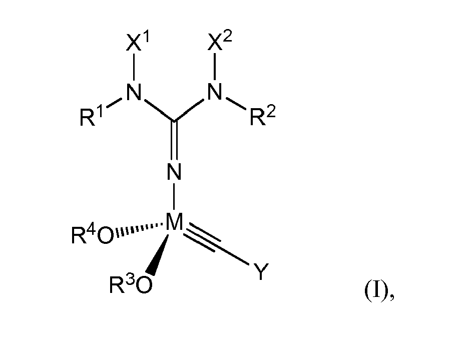 wherein
M is Mo or W,
R¹, R², are independently selected from hydrogen and C1 (hetero-) alkyl or (hetero-) aryl to C20 (hetero-) alkyl or (hetero-) aryl,
R³, R⁴ are independently selected C 1 (hetero-) alkyl or (hetero-) aryl to C20 (hetero-) alkyl or (hetero-) aryl,
X¹, X² are independently selected from H, C1 (hetero-) alkyl or (hetero-) aryl to C20 (hetero-) alkyl or (hetero-) aryl, and
Y is selected from C 1 alkyl or aryl to C20 alkyl or aryl.

2. Compound according to claim 1, wherein R¹, R² are independently selected from Me, CHMe₂, CMe₃, and 2,4,6-Me₃-C₆H₂, and 2,6-*i*Pr₂-C₆H₃.

3. Compound according to one of claims 1 and 2, wherein R³, R⁴ are selected from CMe₃, CH(CF₃)₂, CMe₂CF₃, CMe(CF₃)₂, C(CF₃)₃, 2,4,6-(CF₃)-C₆H₂, and 2,6-(CF₃)-C₆H₃.

4. Compound according to one of the preceding claims, wherein X¹ and X² are replaced groups comprising two, three or four carbon atoms arranged linearly to form a 5-membered, a 6-membered or a 7-membered ring, respectively.

5. Compound according to claim 4, wherein X¹ and X² are replaced by one of the groups selected from CH₂-CH₂, C(R¹)=C(R¹), C(R¹)-C(R¹)-C(R¹), and C=C-C(R¹).

6. Compound according to one of the preceding claims, wherein Y is selected from tert.-butyl and phenyl.

7. Process for the conversion of alkynes, **characterized by** the presence of a compound according to one of the preceding claims.

8. Use of a compound one of claims 1 to 7 for the metathesis of alkynes.
